# EUROPÄISCHE PATENTSCHRIFT

(11) **EP 0 474 056 B1**
(45) Veröffentlichungstag und Bekanntmachung des Hinweises auf die Patenterteilung: **15.12.1993**
(21) Anmeldenummer: 91114123.2
(22) Anmeldetag: 23.08.1991
(51) Int. Cl.: B23Q 11/08

(54) **Faltenbalg**
Bellows
Soufflet

(30) Priorität: 04.09.1990 DE 9012626 U; 22.02.1991 DE 9102107 U
(43) Veröffentlichungstag der Anmeldung: 11.03.1992
(73) Patentinhaber: Arno Arnold GmbH, D-63179 Obertshausen (DE)
(72) Erfinder: Mang, Wolf, Dipl.-Kfm, W-6053 Obertshausen (DE)
(74) Vertreter: Missling, Arne, Dipl.-Ing.

(56) Entgegenhaltungen:
- DE-A- 2 231 535
- DE-A- 3 635 874
- JP-A-60 034 572

## Beschreibung

Die Erfindung bezieht sich auf einen Faltenbalg, bestehend aus einem längenveränderbaren Balgen und einer Vielzahl von Lamellen, welche jeweils mittels einer Achse an einer Falte des Balgens gelagert sind.

Ein Faltenbalg der genannten Art ist beispielsweise zur Abdeckung von Führungsbahnen o.ä. von Maschinen, insbesondere von Werkzeugmaschinen verwendbar, wobei der Faltenbalg sowohl verhindern soll, daß Partikel, wie etwa Schmutz oder Späne, oder auch Schmiermittel o.ä. auf die Führungsbahn gelangen, als auch ein Entweichen der an der Führungsbahn aufgebrachten Gleitmittel unterbinden soll. Aus diesem Grunde ist es erforderlich, daß der Faltenbalg sowohl eine ausreichende Dichtigkeit aufweist, als auch mechanisch widerstandsfähig ist. Eine weitere Voraussetzung für die Funktionsfähigkeit des Faltenbalges liegt darin, daß dieser praktisch unbegrenzt ausziehbar und zusammenschiebbar ist, ohne daß seine Funktionsfähigkeit hierdurch beeinträchtigt würde.

Ein Faltenbalg mit Lamellen, welche beispielsweise aus einem metallischen Werkstoff bestehen, wird vorzugsweise dann verwendet, wenn der Balgen selbst keine ausreichende Widerstandsfähigkeit gegen die abzuhaltenden Partikel oder Materialien aufweist. Dies ist beispielsweise bei heißen Metallspänen der Fall oder bei Partikeln, welche ein relativ grosses Eigengewicht aufweisen und/oder mit einer hohen Geschwindigkeit auf den Faltenbalg auftreffen. Die Lamellen bilden somit eine schuppenartige Panzerung für das empfindlichere Balgenmaterial.

Bei einem vorbekannten Faltenbalg sind die einzelnen Lamellen jeweils schwenkbar mittels scharnierartiger Elemente an der Achse gelagert, während die Achse selbst über ähnlich ausgebildete Scharnierelemente an der jeweiligen Falte des Balgens befestigt ist. Das Befestigen der einzelnen Scharnierelemente an dem Balgen erfolgt durch Verkleben, der Faltenbalg ist insgesamt so ausgestaltet, daß ein üblicher, mit einzelnen Tragrahmen ausgerüsteter Faltenbalg zusätzlich mit Lamellen bestückt wird. Diese Ausgestaltungsform weist den Nachteil auf, daß bereits eine relativ komplizierte Grundkonstruktion für den Faltenbalg erforderlich ist, auf welche in aufwendigen Herstellungsschritten die einzelnen Lamellen angeordnet werden. Ein weiterer, wesentlicher Nachteil besteht darin, daß die scharnierartigen Befestigungselemente für die einzelnen Achsen mit dem Balgen zu verkleben sind. Insbesondere bei einem Einsatz des Faltenbalges in einer aggressiven Atmosphäre besteht deshalb die Gefahr, daß sich die Klebestellen bereits nach kürzester Zeit lösen, so daß der Faltenbalg zumindest zum Teil unbrauchbar wird.

Eine ähnliche Konstruktion, die dem Faltenbalg gemäß dem Oberbegriff des Anspruchs 1 entspricht, ist aus dem Gebrauchsmuster 78 09 596 vorbekannt, auch hier werden zusätzliche Lamellen über ein Winkelprofil mit dem Trägermaterial des Balgens verklebt. Die sich hieraus ergebenden Nachteile sind die gleichen, wie bei dem oben beschriebenen Faltenbalg.

Eine weitere Lösung ist aus dem Gebrauchsmuster 82 34 801 vorbekannt. Bei diesem Faltenbalg sind die einzelnen Lamellen jeweils nur an ihren Seitenbereichen mittels einer Lageröse und eines Lagerstiftes an dem Trägermaterial des Balgens befestigt. Der Lagerstift ist entweder mit einem Trägerrahmen des Balgens verklebt oder verklemmt. Beide Lösungen sind sehr aufwendig in der Herstellung und weisen eine relativ hohe Störungsanfälligkeit auf, da die Lamellen jeweils nur an ihren Seitenbereichen gelagert sind und infolge dessen in diesen Bereichen besonders hohe Kräfte auftreten. Bei einer Verklebung des Lagerstiftes an dem Balgenmaterial ergeben sich durch eine Lösung des Klebstoffes die gleichen Nachteile, wie bei den bereits vorbeschriebenen Faltenbalgen, bei einem Verklemmen des Lagerstiftes mittels Klammern besteht die Gefahr, daß zum einen der Balgen beschädigt wird und zum anderen die Klammern wärend des Betriebes des Faltenbalges abrutschen. Insbesondere bei sehr hohen Bewegungsgeschwindigkeiten kann bereits das Lockern einer einzigen Lamelle dazu führen, daß der gesamte Faltenbalg beschädigt und damit unbrauchbar wird.

Bei Faltenbalgen der beschriebenen Art ist es auch erforderlich, diese in geeigneter Weise längs ihrer Bewegungsrichtung zu führen, da die Balgen, bedingt durch das Gewicht der Lamellen, ein relativ hohes Gesamtgewicht aufweisen. Bei dem vorbekannten Faltenbalg erfolgt die Führung im Bereich der äusseren Enden der Lamellen, wobei diese entweder in eine Führungsschiene eingeführt sind oder Ausnehmungen aufweisen, in welchen die Führungsschiene läuft. Diese Art der Ausgestaltung der Führung des Faltenbalgs erweist sich bei einer geringeren Breite der Lamellen bzw. des Faltenbalgs als praktikabel. Hierbei spielt insbesondere die mechanische Knickfestigkeit der Lamellen und ihrer Lagerachsen eine große Rolle. Sobald der Faltenbalg jedoch eine größere Breite aufweist, ist eine Führung lediglich im äußeren Endbereich der Lamellen nicht mehr ausreichend. Es besteht dann die Gefahr, daß der mittlere Bereich des Faltenbalgs einknickt oder sich deformiert. Diese Gefahr wird insbesondere dann verstärkt auftreten, wenn der Faltenbalg zusätzlich einen mechanischen Schutz bieten soll.

Der Erfindung liegt die Aufgabe zugrunde, einen Faltenbalg der eingangs genannten Art zu schaffen, welcher bei einfachem Aufbau und betriebssicherer Wirkungsweise eine zuverlässige und einfache Lagerung der Lamellen aufweist, welcher mit guten Dichtungseigenschaften versehen ist und klebstofffrei aufgebaut werden kann und eine sichere Lagerung und Führung des Balgens und der Lamellen gewährleistet.

Erfindungsgemäß wird die Aufgabe dadurch gelöst, daß an der Falte des Balgens eine Schlaufe ausgebildet ist, in welcher die Achse aufgenommen ist, und daß die Schlaufe mit zumindest einer Ausnehmung versehen ist, durch welche sich ein die Achse mit der Lamelle verbindendes Befestigungselement erstreckt.

Der erfindungsgemäße Faltenbalg zeichnet sich durch eine Reihe erheblicher Vorteile aus.

Da erfindungsgemäß die Achse in einer Schlaufe der Falte des Balgens aufgenommen ist, wird die Möglichkeit geschaffen, die Achse so zu lagern, daß das Material des Balgens selbst nicht geschwächt oder perforiert wird, so daß die Dichtigkeit des Balgens bzw. des Faltenbalges nicht durch das Anbringen der Achse beeinträchtigt wird. Es ist somit möglich, den Faltenbalg auch für Verwendungszwecke einzusetzen, bei welchen ein dichter Abschluß erforderlich ist, beispielsweise zur Abdichtung gegenüber aggressiven Medien, wie etwa Lösungsmitteln und dergleichen.

Ein weiterer, wesentlicher Vorteil des Faltenbalges ist dadurch gegeben, daß dieser zur Lagerung der Achse keine Klebeverbindungen o.ä. benötigt, sondern die Achse vielmehr rein mechanisch durch Einhängen in die Schlaufe gelagert ist.

Die erfindungsgemäß geschaffene Ausnehmung an der Schlaufe ermöglicht es, die Achse so zu lagern, daß auch bei sehr langen Lamellen, im Gegensatz zum Stand der Technik, eine gleichmäßige und verwindungsfreie Befestigung der Lamellen möglich ist. Da die Ausnehmung nur im Bereich der Schlaufe ausgebildet ist, entstehen hierdurch keine Probleme hinsichtlich der Dichtigkeit des Balgens selbst. Das erfindungsgemäß vorgesehene Befestigungselement kann mit der Lamelle beispielsweise einstückig ausgebildet oder mechanisch verankert sein, es kann weiterhin fest mit der Achse verbunden oder auf diese aufgesteckt sein.

Erfindungsgemäß ergeben sich unterschiedliche Möglichkeiten für die Ausbildung der Schlaufe. Diese kann beispielsweise durch Abnähen des Balgenmateriales ausgebildet werden, es ist auch möglich, die Schlaufe bei einem versiegelungsfähigen Balgenmaterial durch Anbringen einer Siegelnaht zu erstellen.

Die Ausnehmung kann erfindungsgemäß beispielsweise durch Ausstanzen o.ä. eingebracht werden, bevorzugterweise weist die Ausnehmung eine Länge, in Längsrichtung der Achse auf, welche im wesentlichen der Länge des Befestigungselementes entspricht, so daß ein seitliches Verrutschen der Achse und/oder der Lamelle verhindert wird.

Erfindungsgemäß kann die Lamelle starr mit der Achse verbunden sein, wobei sich bei einer Verschwenkung der Lamelle auch die Achse in der Lasche dreht, es ist jedoch auch möglich, die Lamelle so an der Achse zu lagern, daß sie relativ zu dieser schwenkbar ist, beispielsweise unter Verwendung eines scharnierartigen Elementes.

In einer besonders günstigen Ausgestaltung der Erfindung ist vorgesehen, daß die Lamelle an dem freien Ende abgewinkelt ausgebildet ist, so daß sich eine Linienberührung am Auflageende der Lamelle ergibt. Bevorzugterweise ist die Breite der Lamelle so gewählt, daß im maximal ausgezogenen Zustand des Faltenbalges jede Lamelle mit ihrem freien Ende auf der jeweils benachbarten Lamelle aufliegt, so daß in jedem Betriebszustand des Faltenbalges eine sichere Abdeckung und ein sicherer Schutz des Balgens gewährleistet sind. Ein gleichmäßiger Andruck der oberen an eine untere Lamelle im ausgezogenen Zustand wird dadurch erreicht, daß die nach oben angewinkelte Lamelle durch das Faltenbalgmaterial gespannt wird.

Der erfindungsgemäße Faltenbalg ist sowohl in horizontaler als auch in vertikaler Einbaurichtung verwendbar, in vertikaler Einbaurichtung bewirkt das Gewicht der einzelnen Lamellen eine sichere Auflage, in horizontaler Einbaurichtung ist es möglich, im Bereich der Lagerung der Lamelle zusätzliche Federelemente zu deren Vorspannung anzubringen, welche sich beispielsweise gegen den Balgen abstützen.

Die erfindungsgemäße Ausgestaltung des Faltenbalges schafft weiterhin die Möglichkeit, seitlich zu den Achsen jeweils eine Führungsbahn anzuordnen, in welcher ein seitlich über die Lamelle überstehender Bereich der Achse geführt ist. Es ist somit nicht erforderlich, zusätzliche Rahmen o.ä. zu verwenden, so wie dies aus dem Stand der Technik bekannt ist, um den Faltenbalg an dem Maschinenbett abzustützen. Alternativ dazu können auch die Lamellen mit seitlichen Vorsprüngen versehen sein, welche in seitlichen Führungsbahnen geführt sind. In einer Abwandlung dieses Prinzips ist es auch möglich, die Lamellen mit seitlichen Ausnehmungen zu versehen, in welche entsprechende Bereiche seitlicher Führungsbahnen eindringen.

Erfindungsgemäß ist weiterhin in vorteilhafter Ausgestaltung vorgesehen, daß an der den Lamellen gegenüberliegenden Seite des Balgens in im Bereich zumindest einer der Falten zumindest ein mit einer Ausnehmung versehenes Führungselement angebracht ist, durch welches eine Führungsstange durchführbar ist. Durch diese Ausgestaltung ergeben sich eine Reihe von weiteren Vorteilen. Da eine Führung mittels einer Führungsstange erfolgt, welche sich in Bewegungsrichtung des Balgens erstreckt, kann die Führung des Faltenbalgs unabhängig von dessen Breite vorgenommen werden, es können mehrere derartige Führungsstangen verwendet werden. Die Führungsstangen können in geeigneter Weise den jeweiligen Anforderungen angepaßt sein, insbesondere hinsichtlich ihrer Dimensionierung und Festigkeit. Weiterhin gestattet der erfindungsgemäße Faltenbalg eine Führung unabhängig von den Endbereichen der Lamellen bzw. des eigentlichen Balgens, so daß an diesen Bereichen zusätzliche Maßnahmen getroffen werden können, beispielsweise Abdichtungen am Randbereich. Es ist auch möglich, die Randbereiche des Balgens in ihrer Formgebung den jeweiligen Anwendungsbedingungen anzupassen, so daß der Balgen beispielsweise einen Baukörper zumindest teilweise seitlich umgreift.

Die Verwendung eines Führungselementes gestattet es, ohne Änderung der Grundkonstruktion des Faltenbalgs eine Anpassung an die jeweilige Führung vorzunehmen, so daß es möglich ist, die Erfindung bei einer Vielzahl unterschiedlich aufgebauter Faltenbalge zu verwenden.

In einer bevorzugten Weiterbildung der Erfindung ist vorgesehen, daß das Führungselement in Form einer starren Platte ausgebildet ist, welche bewegbar an der Falte gelagert ist. Die starre Ausgestaltung des Führungselementes bringt den Vorteil, daß dieses während der Verschiebung des Faltenbalgs nicht verformt wird und somit ein Klemmen ausgeschlossen ist. Die bewegbare Lagerung des Führungselementes bietet den Vorteil, geringfügige Verformungen des Balgens zuzulassen, ohne daß hierdurch die Funktionsfähigkeit der Führung beeinflußt wird.

Das starre Führungselement kann erfindungsgemäß mittels eines flexiblen Zwischenelementes mit dem Balgen verbunden sein, das Zwischenelement kann beispielsweise in Form einer Textilschicht o.ä. ausgebildet sein.

Um eine sichere Führung des Faltenbalgs zu gewährleisten, ist es besonders günstig, wenn zumindest zwei voneinander beabstandete Führungsstangen vorgesehen sind. Zur Erhöhung der Stabilität trägt es weiterhin bei, wenn an jeder zweiten Falte des Balgens ein Führungselement angebracht ist.

Das Führungselement oder das Zwischenelement kann mit dem Balgen vernäht oder versiegelt sein, wobei es günstig sein kann, wenn die Naht oder Siegelnaht, welche dazu dient, an dem Faltenbalg eine Falte zur Aufnahme der Achse der Lamelle auszubilden, gleichzeitig zur Befestigung des Führungselementes bzw. des Zwischenelementes dient.

Im folgenden wird die Erfindung anhand von Ausführungsbeispielen in Verbindung mit der Zeichnung beschrieben. Dabei zeigt:
- Fig. 1: eine perspektivische Ansicht eines Ausführungsbeispiels des erfindungsgemäßen Faltenbalges in vertikaler Anordnung,
- Fig. 2: eine vereinfachte Seitenansicht des in Fig. 1 gezeigten Ausführungsbeispiels und
- Fig. 3: eine Seitenansicht, ähnlich Fig. 2, jedoch im zusammengeschobenen Zustand des Faltenbalges.
- Fig. 4: eine schematische Seitenansicht eines weiteren Ausführungsbeispieles des erfindungsgemäßen Faltenbalgs und
- Fig. 5: eine perspektivische Rückansicht des in Fig. 4 gezeigten Faltenbalgs.

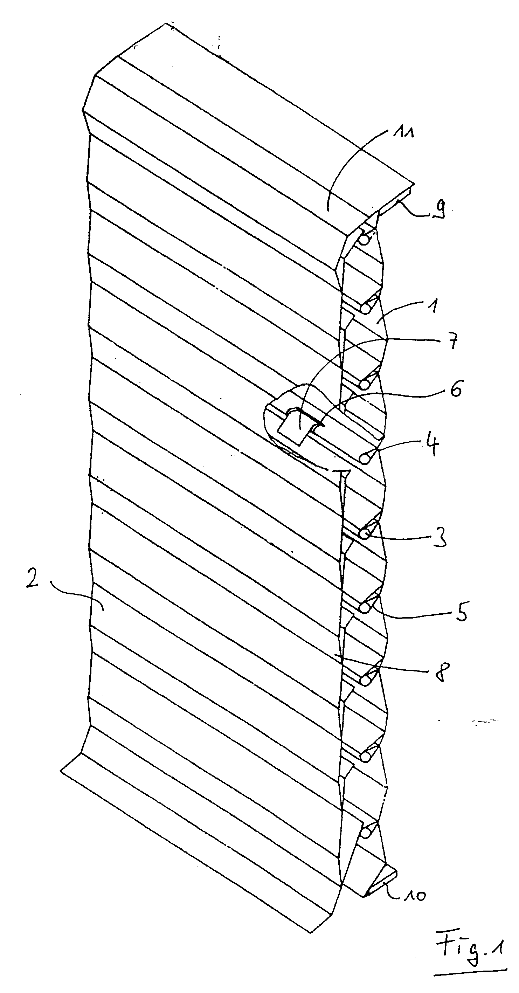

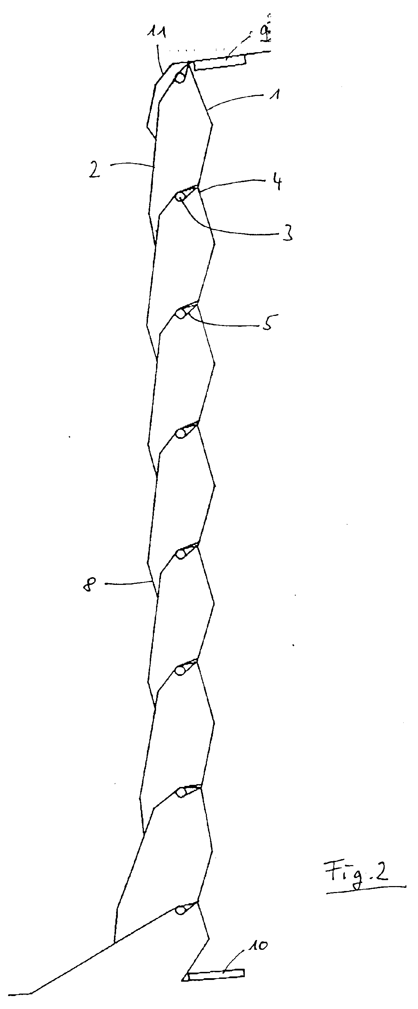

Der erfindungsgemäße Faltenbalg umfaßt einen Balgen 1, welcher in üblicher Weise zickzackförmig gefaltet ist und aus einem zumindest zum Teil elastischen Material besteht. Der Balgen 1 kann sowohl gas- als auch flüssigkeitsundurchlässig ausgebildet sein. An den jeweils nach außen weisenden Falten 4 des Balgens 1 ist jeweils eine Schlaufe 5 ausgebildet, so wie dies insbesondere aus der Darstellung der Fig. 2 ersichtlich ist. Die Schlaufe 5 kann beispielsweise durch Abnähen erzeugt werden. In den durch die Schlaufe 5 gebildeten Hohlraum ist eine Achse 3 eingelegt, an welcher, wie im einzelnen beschrieben werden wird, jeweils eine Lamelle 2 gelagert ist. Die Lagerung der Lamelle 2 erfolgt mittels eines in Fig. 1 vereinfacht dargestellten Befestigungselementes 7, welches sowohl an der Lamelle 2 als auch an der Achse 3 befestigt ist. Das Befestigungselement 7 ist in einer Ausnehmung 6 der Schlaufe 5 plaziert und durchgreift somit das Material des Balgens 1, so daß zum einen die Lamelle in entsprechender Weise an der Achse gelagert werden kann und zum anderen die Dichtigkeit des Balgens 1 selbst nicht beeinträchtigt wird. Da üblicherweise sowohl die Lamelle 2 als auch die Achse 3 aus Metall gefertigt sind, ergeben sich hinsichtlich der Verbindung mittels des Befestigungselementes 7 keine Probleme, da dieses sowohl mit der Achse als auch mit der Lamelle metallisch verbunden werden kann, beispielsweise verschweißt oder verlötet. Der Faltenbalg kann somit klebstoffrei ausgebildet werden, so daß sich auch bei einer aggressiven Umgebungsatmosphäre keine Störungen der Festigkeit des Faltenbalges ergeben.

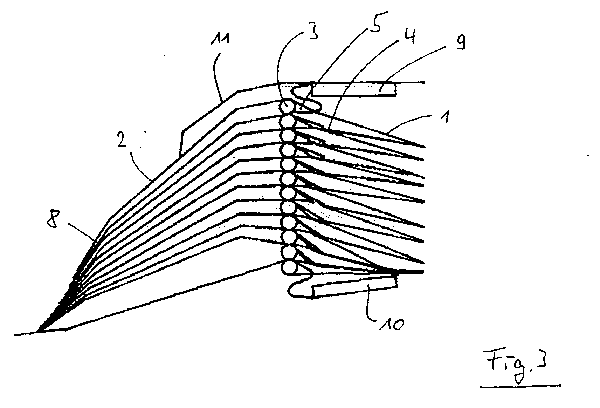

Wie sich aus einem Vergleich der Fig. 2 und 3 ergibt, sind die Lamellen 2 jeweils so an dem Balgen angebracht, daß die Lamelle 2 relativ zu der Schlaufe 5 verschwenkbar ist. Es ist somit möglich, die Lamellen beim Zusammenschieben des Faltenbalges schuppenartig überlappend relativ zueinander zu verschieben. Um die Anlage der jeweiligen Lamelle 2 an der benachbarten Lamelle zu verbessern, ist das freie Ende 8 der jeweiligen Lamelle 2 gewinkelt ausgebildet.

Wie sich aus den Fig. 1 bis 3 weiterhin ergibt, ist der Faltenbalg mit einem oberen und einem unteren Endrahmen 9,10 versehen, welcher jeweils zur Befestigung des Faltenbalges an einem Maschinenelement dient. An dem oberen Endrahmen 9 ist eine End-Lamelle 11 gelagert, welche in jedem Betriebszustand eine gleichmäßige Abdeckung und einen gleichmäßigen Übergang zu der benachbarten, bereits beschriebenen Lamelle 2 sichert.

Es versteht sich für den Fachmann, daß der beschriebene Faltenbalg sowohl in horizontaler als auch in vertikaler Einbaulage verwendbar ist.

Die Fig. 1 bis 3 zeigen aus Gründen der Vereinfachung nicht seitliche Führungsschienen o.ä., in welchen beispielsweise verlängerte, überstehende Bereiche der Achsen 3 geführt sein können, so daß zusätzliche Führungs- oder Abstützrahmen, wie sie bei den aus dem Stand der Technik bekannten Faltenbalgen erforderlich sind, nicht benötigt werden.

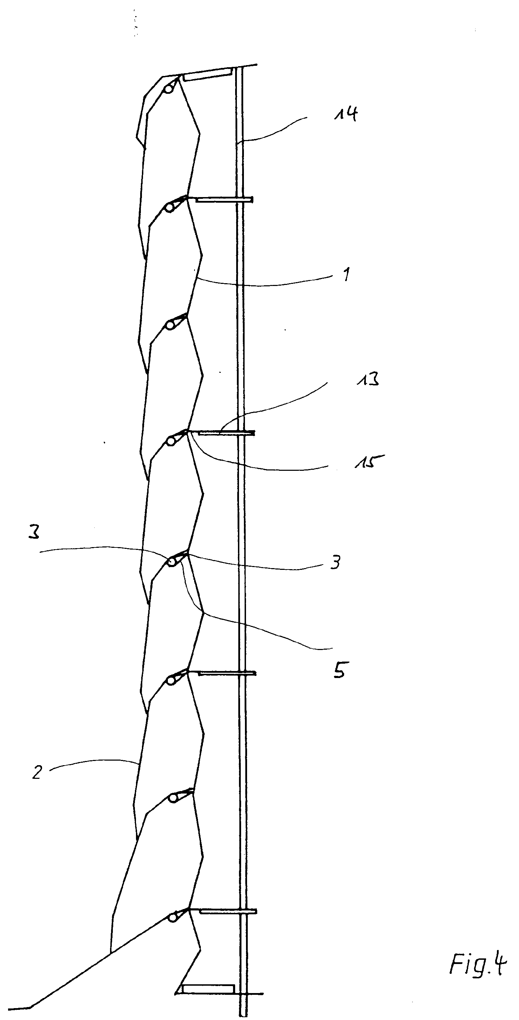

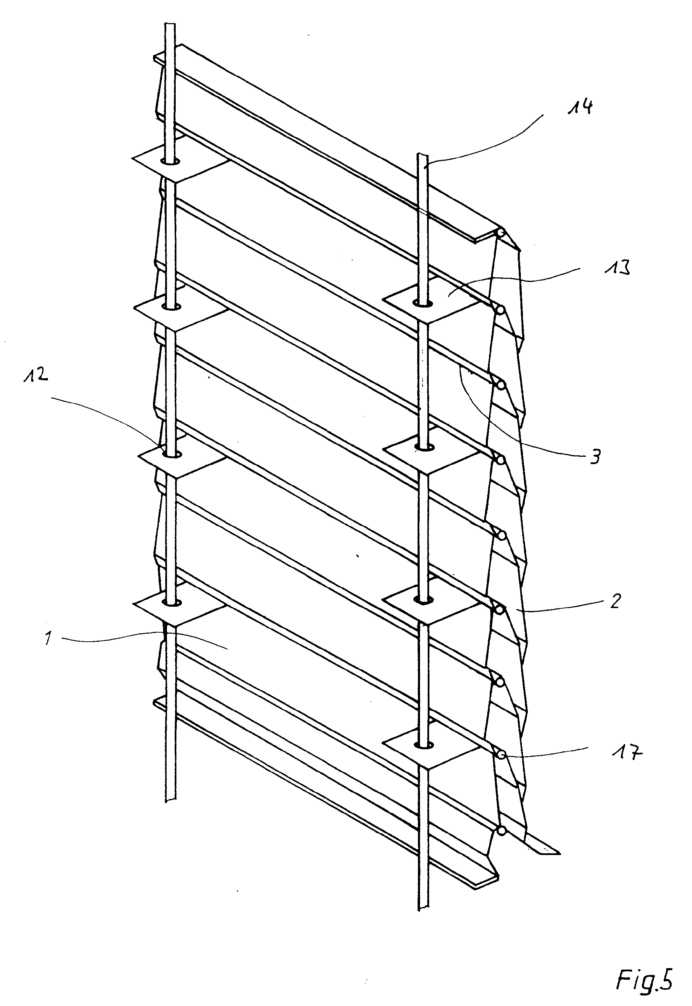

Das in den Fig. 4 und 5 gezeigte Ausführungsbeispiel entspricht in seinem Aufbau im wesentlichen dem Ausführungsbeispiel der Fig. 1 bis 3, gleiche Teile sind mit gleichen Bezugszeichen versehen und werden zur Vermeidung von Wiederholungen nicht im einzelnen beschrieben.

An der den Lamellen 2 abgewandten Seite des Balgens 1 sind erfindungsgemäß plattenförmige Führungselemente 13 vorgesehen, welche jeweils eine Ausnehmung 12 aufweisen, durch welche sich eine Führungsstange 14 erstreckt, so wie dies insbesondere in Fig. 5 dargestellt ist. Die Führungselemente 13 sind jeweils im wesentlichen starr und, wie in Fig. 4 gezeigt, wahlweise mittels eines Zwischenelementes 15 mit dem Balgen 1 verbunden, beispielsweise durch Verkleben, Vernähen o.ä..

Die Führungselemente 13 sind, wie in Fig. 5 gezeigt, auf die jeweilige Führungsstange 14 aufgefädelt, so daß bei einer vertikalen Verschiebung des Faltenbalgs der Balgen in einem gleichbleibenden Abstand von der Führungsstange geführt wird.

Wie insbesondere aus Fig. 4 ersichtlich ist, ist die Länge des Führungselementes 13 so bemessen, daß der Abstand zwischen der Innenkante der Falte 3, an welcher das Führungselement 13 befestigt ist, und der Führungsstange 14 gleich oder größer ist zu der Breite, welche der Faltenbalg im zusammengeschobenen Zustand einnimmt. Eine Berührung der Kanten des Balgens 1 mit der Führungsstange 14 wird somit ausgeschlossen, so daß Beschädigungen des Balgens, beispielsweise ein Durchscheuern vermieden werden.

Die Erfindung ist nicht auf das gezeigte Ausführungsbeispiel beschränkt, vielmehr ergeben sich für den Fachmann im Rahmen der Erfindung, wie in den anhängenden Ansprüchen definiert, vielfältige Abwandlungs- und Modifikationsmöglichkeiten.

## Patentansprüche

1. Faltenbalg, bestehend aus einem längenveränderbaren Balgen (1) und einer Vielzahl von Lamellen (2), welche jeweils mittels einer Achse (3) an einer Falte (4) des Balgens (1) gelagert sind, dadurch gekennzeichnet, daß an der Falte (4) des Balgens (1) eine Schlaufe (5) ausgebildet ist, in welcher die Achse (3) aufgenommen ist, und daß die Schlaufe (5) mit zumindest einer Ausnehmung (6) versehen ist, durch welche sich ein die Achse (3) mit der Lamelle (2) verbindendes Befestigungselement (7) erstreckt.

2. Faltenbalg nach Anspruch 1, dadurch gekennzeichnet, daß die Schlaufe (5) durch Abnähen oder Versiegelung des Balgenmateriales gebildet ist.

3. Faltenbalg nach einem der Ansprüche 1 oder 2, dadurch gekennzeichnet, daß die Lamelle (2) starr oder schwenkbar mit der Achse (3) verbunden ist.

4. Faltenbalg nach einem der Ansprüche 1 - 3, dadurch gekennzeichnet, daß seitlich zu den Achsen (3) jeweils eine Führungsbahn angeordnet ist, in welcher ein seitlich über die Lamelle überstehender Bereich der Achse (3) geführt ist.

5. Faltenbalg nach einem der Ansprüche 1 - 3, dadurch gekennzeichnet, daß die Lamellen (2) seitliche Vorsprünge aufweisen, welche in seitlichen Führungsbahnen geführt sind.

6. Faltenbalg nach einem der Ansprüche 1 - 3, dadurch gekennzeichnet, daß die Lamellen (2) seitliche Ausnehmungen aufweisen, in welchen seitliche Führungsschienen geführt sind.

7. Faltenbalg nach einem der Ansprüche 1 - 6, dadurch gekennzeichnet, daß an der den Lamellen (2) gegenüberliegenden Seite des Balgens (1) im Bereich zumindest einer der Falten (4) zumindest ein mit einer Ausnehmung (12) versehenes Führungselement (13) angebracht ist, durch welches eine Führungsstange (14) durchführbar ist.

8. Faltenbalg nach Anspruch 7, dadurch gekennzeichnet, daß das Führungselement (13) in Form einer starren Platte ausgebildet ist, welche bewegbar an der Falte (3) gelagert ist.

9. Faltenbalg nach Anspruch 8, dadurch gekennzeichnet, daß das Führungselement (13) mittels eines flexiblen Zwischenelementes (15) mit dem Balgen (1) verbunden ist.

10. Faltenbalg nach einem der Ansprüche 7 - 9, dadurch gekennzeichnet, daß an der jeweiligen Falte (3) des Balgens (1) zumindest zwei voneinander beabstandete Führungsstangen (14) angebracht sind.

11. Faltenbalg nach einem der Ansprüche 7 - 10, dadurch gekennzeichnet, daß an jeder zweiten Falte (3) des Balgens (1) ein Führungselement (13) angebracht ist.

12. Faltenbalg nach einem der Ansprüche 7 - 11, dadurch gekennzeichnet, daß das Führungselement (13) oder das Zwischenelement (15) mit dem Balgen (1) vernäht oder versiegelt ist.

## Claims

1. Bellows, comprising a longitudinally adjustable corrugated element (1) and a plurality of segments (2) which are each mounted on a fold (4) of the corrugated element (1) by means of a spindle (3), characterised in that a loop (5), in which the spindle (3) is contained, is formed at the fold (4) of the corrugated element (1), and in that the loop (5) is provided with at least one recess (6), through which a fastening element (7) connecting the spindle (3) to the segment (2) extends.

2. Bellows according to claim 1, characterised in that the loop (5) is formed by stitching or sealing the material of the corrugated element.

3. Bellows according to either one of claims 1 and 2, characterised in that the segment (2) is rigidly or tiltably connected to the spindle (3).

4. Bellows according to any one of claims 1 to 3, characterised in that a guideway is arranged on either side of the spindles (3), a region of the spindle (3) projecting laterally beyond the segment being guided in the said guideway.

5. Bellows according to any one of claims 1 to 3, characterised in that the segments (2) have lateral projections which are guided in lateral guideways.

6. Bellows according to any one of claims 1 to 3, characterised in that the segments (2) have lateral recesses in which lateral guide rails are guided.

7. Bellows according to any one of claims 1 to 6, characterised in that at least one guide element (13) provided with a recess (12) is arranged in the region of at least one of the folds (4) on the side of the corrugated element (1) facing the segments (2), a guide rod (14) being guidable through the said guide element (13).

8. Bellows according to claim 7, characterised in that the guide element (13) is formed as a rigid plate which is movably mounted on the fold (3).

9. Bellows according to claim 8, characterised in that the guide element (13) is connected to the corrugated element (1) by means of a flexible intermediate element (15).

10. Bellows according to any one of claims 7 to 9, characterised in that at least two guide rods (14) spaced apart are provided on the respective fold (3) of the corrugated element (1).

11. Bellows according to any one of claims 7 to 10, characterised in that a guide element (13) is mounted on every second fold (3) of the corrugated element (1).

12. Bellows according to any one of claims 7 to 11, characterised in that the guide element (13) or the intermediate element (15) is stitched or sealed on the corrugated element (1).

## Revendications

1. Soufflet à plis, constitué d'un soufflet (1), modifiable en longueur, et d'un grand nombre de lamelles (2) montées chacune, au moyen d'un axe (3), sur un pli (4) du soufflet (1), caractérisé en ce que, sur le pli (4) du soufflet (1), est réalisée une boucle fermée (5) dans laquelle est pris l'axe (3), et en ce que la boucle fermée (5) présente au moins un évidement (6) par lequel passe un organe de fixation (7) reliant l'axe (3) à la lamelle (2).

2. Soufflet à plis suivant la revendication 1, caractérisé en ce que la boucle fermée (5) est réalisée par couture ou par scellement du matériau constituant le soufflet.

3. Soufflet à plis suivant la revendication 1 ou la revendication 2, caractérisé en ce que la lamelle (2) est liée à l'axe (3) de façon rigide ou avec possibilité de pivoter.

4. Soufflet à plis suivant l'une quelconque des revendications 1 à 3, caractérisé en ce qu'un chemin de guidage, dans lequel est guidée une partie de l'axe (3) dépassant latéralement de la lamelle, est disposé de chaque côté des axes.

5. Soufflet à plis suivant l'une quelconque des revendications 1 à 3, caractérisé en ce que les lamelles (2) présentent des saillies latérales, qui sont guidées dans des chemins de guidage latéraux.

6. Soufflet à plis suivant l'une quelconque des revendications 1 à 3, caractérisé en ce que les lamelles (2) présentent des évidements latéraux, dans lesquels pénètrent des rails de guidage latéraux.

7. Soufflet à plis suivant l'une quelconque des revendications 1 à 6, caractérisé en ce que, sur le côté du soufflet (1) opposé aux lamelles (2), dans la zone d'au moins l'un des plis (4), est disposé au moins un organe de guidage (13) présentant un évidement (12) au travers duquel on peut faire passer une tige de guidage (14).

8. Soufflet à plis suivant la revendication 7, caractérisé en ce que l'organe de guidage (13) est réalisé sous la forme d'une plaque rigide, montée sur le pli (3) de façon à pouvoir se déplacer.

9. Soufflet à plis suivant la revendication 8, caractérisé en ce que l'organe de guidage (13) est relié au soufflet (1) au moyen d'un élément intermédiaire (15) flexible.

10. Soufflet à plis suivant l'une quelconque des revendications 7 à 9, caractérisé en ce que, au droit de chacun des plis (3) concernés du soufflet (1), sont disposées au moins deux tiges (14) placées à une certaine distance l'une de l'autre.

11. Soufflet à plis suivant l'une quelconque des revendications 7 à 10, caractérisé en ce qu'un organe de guidage (13) est associé à un pli (3) du soufflet (1) sur deux.

12. Soufflet à plis suivant l'une quelconque des revendications 7 à 11, caractérisé en ce que l'organe de guidage (13), ou l'élément intermédiaire (15), est cousu ou scellé avec le soufflet (1).
